# EUROPÄISCHE PATENTSCHRIFT

(11) **EP 0 772 058 B1**
(45) Veröffentlichungstag und Bekanntmachung des Hinweises auf die Patenterteilung: **08.01.2003**
(21) Anmeldenummer: 96114846.7
(22) Anmeldetag: 16.09.1996
(51) Int. Cl.: G01S 13/02, G06K 7/10

(54) **Identifizierungs- und/oder Sensorsystem**
Identification and/or sensor system
Système d'identification et/ou de détection

(30) Priorität: 24.10.1995 DE 19539506
(43) Veröffentlichungstag der Anmeldung: 07.05.1997
(73) Patentinhaber: EPCOS AG, 81541 München (DE)
(72) Erfinder: Seifert, Franz, Prof.-Dr., 1170 Wien (AT); Pohl, Alfred, Dr., 2130 Misterbach (AT); Ostermayer, Gerhard, 1170 Wien (AT)
(74) Vertreter: Epping, Wilhelm, Dipl.-Ing.

(56) Entgegenhaltungen:
- DE-A- 4 217 049
- SEIFERT F ET AL: "MECHANICAL SENSORS BASED ON SURFACE ACOUSTIC WAVES" SENSORS AND ACTUATORS A, Bd. A44, Nr. 3, 1.September 1994, Seiten 231-239, XP000483967
- MICHEL J: "DEHNUNGSMESSUNG MIT FUNKABFRAGBAREN OFW-RESONATOREN" TECHNISCHES MESSEN TM, Bd. 62, Nr. 9, 1.September 1995, Seiten 342-345, XP000527993

## Beschreibung

Die vorliegende Erfindung betrifft ein Identifizierungsund/oder Sensorsystem nach dem Oberbegriff des Patentanspruchs 1.

Identifizierungs- und/oder Sensorsysteme der gattungsgemäßen Art sind beispielsweise aus der DE-OS 42 17 049 bekannt. Es handelt sich dabei um Systeme mit passiven Oberflächenwellensensoren zur Meßwertermittlung, bei denen ein Sende- und Empfangsgerät einem im Oberflächenwellensensor enthaltenen Sensorelement als Abfrageimpuls über Funkt Energie übermittelt. Derartige Systeme eignen sich zur berührungslosen Meßwerterfassung, wobei das mit akustischen Oberflächenwellen arbeitende Sensorelement und ein ebenfalls mit akustischen Oberflächenwellen arbeitendes Referenzelement zur Phasendiskriminierung und/oder Laufzeitmessung vorgesehen sind.

Derartige Systeme, die mit akustischen Oberflächenwellen arbeitende Sensorelemente - OFW-Sensorelemente - arbeiten sind für eine große Vielzahl von zu detektierenden Größen bzw. Parametern anwendbar.

Sind in einer Identifizierungs- und/oder Sensoranordnung Resonatoren als Elemente vorgesehen, welche die zu detektierenden Größen bzw. Parameter definieren, so klingen die Antwortsignale mit einer Zeitfunktion ab, welche durch die Energieausschwingzeit der Resonatoren gegeben ist.

Der vorliegenden Erfindung liegt die Aufgabe zugrunde, eine Möglichkeit zur Umwandlung des Ausschwingens von Resonatoren in Signale konstanter Frequenz anzugeben.

Diese Aufgabe wird bei einem Identifizierungs- und/oder Sensorsystem der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

Die Erfindung wird nachfolgend anhand von Ausführungsbeispielen gemäß den Figuren der Zeichnungen näher erläutert. Es zeigen:
- Figur 1: ein Blockschaltbild des generellen Aufbaus eines erfindungsgemäßen Identifizierungs- und/oder Sensorsystems;
- Figuren 2 bis 6: jeweils ein Blockschaltbild einer Ausführungsform eines Empfängers eines erfindungsgemäßen Identifizierungs- und/oder Sensorsystems; und
- Figur 7: ein Blockschaltbild eines kombinierten Senders/Empfängers eines erfindungsgemäßen Identifizierungs- und/oder Sensorsystems.

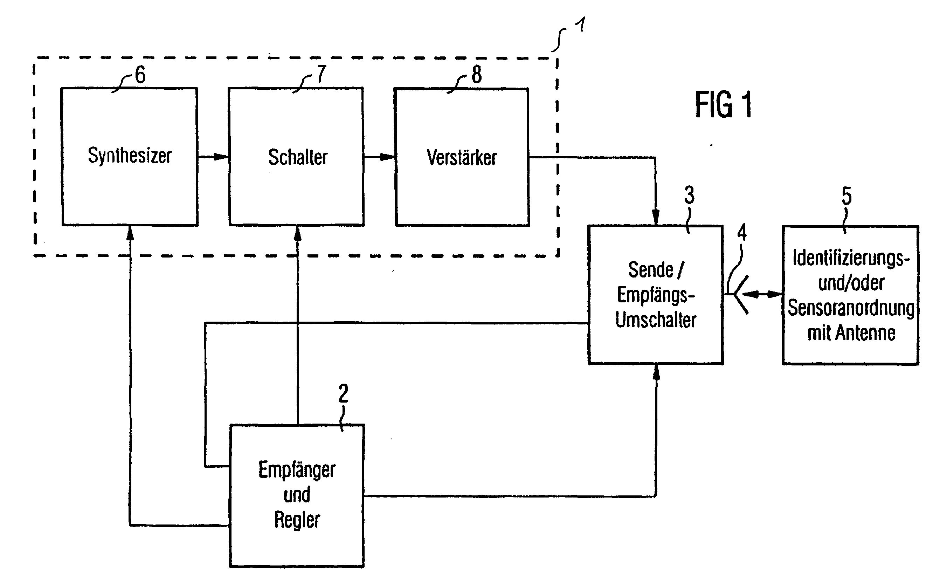

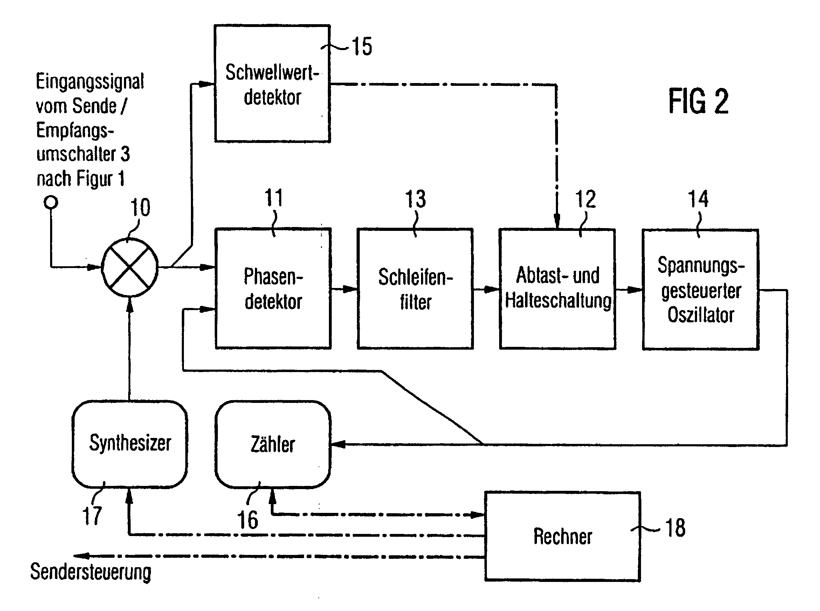

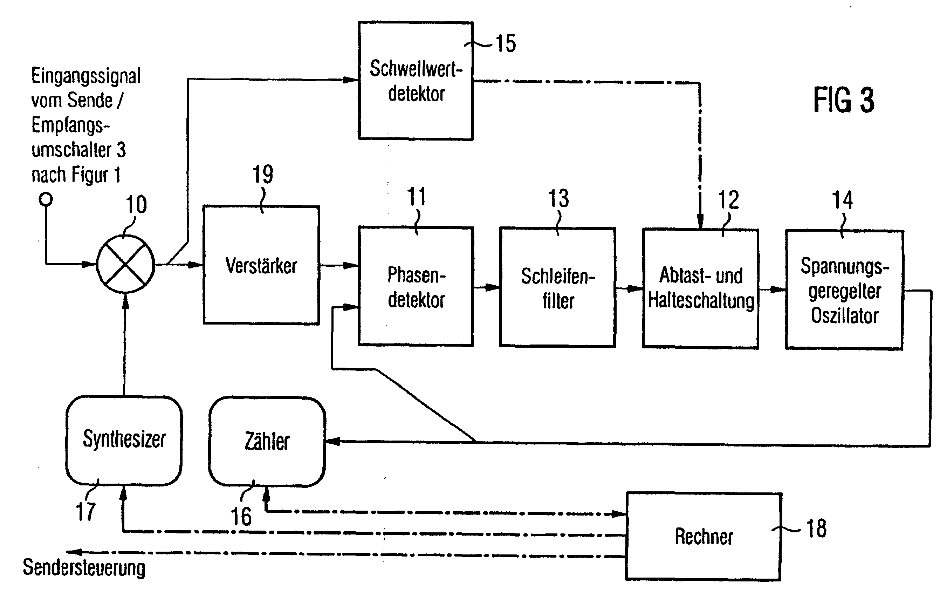

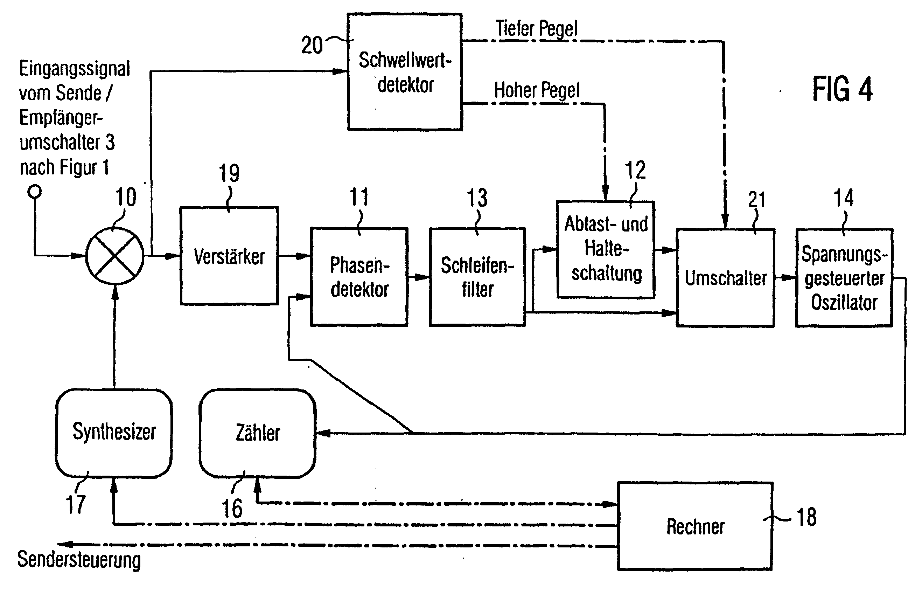

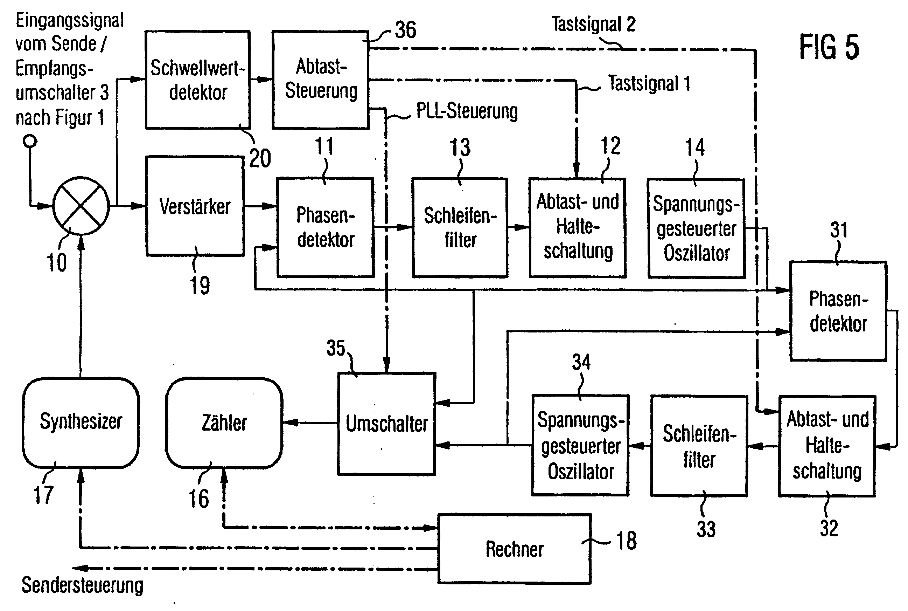

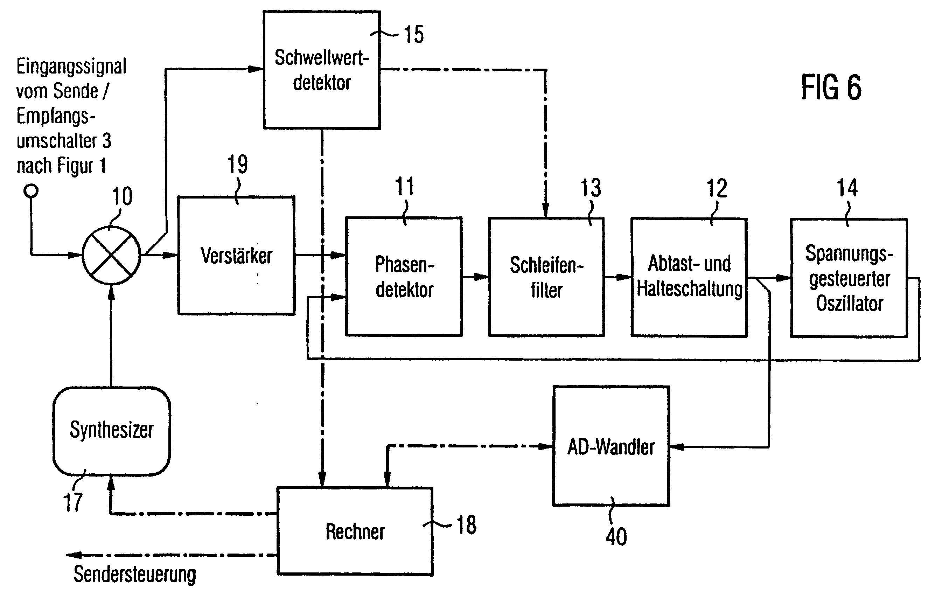

Gemäß Figur 1 enthält ein erfindungsgemäßes Identifizierungsund/oder Sensorsystem generell einen Sender 1 und einen Empfänger und Regler 2, welche über einen SendeSende/Empfangsumschalter auf eine Antenne 4 gekoppelt sind. Über den Sende/Empfangsumschalter 3 und die Antenne 4 wird vom Sender 1 ein Abfragesignal zu einer Identifizierungsund/oder Sensoranordnung mit Antenne 5 gesendet, welche als Funktion des Abfragesignals ein Antwortsignal über die Antenne 4 und den Sende/Empfangsumschalter 3 auf den Empfänger und Regler 2 zurücksendet.

Der Sender 1 enthält einen vom Empfänger und Regler 2 angesteuerten Frequenzsynthesizer 6, der über einen Schalter 7 und einen Verstärker 8 auf den Sende/Empfangsumschalter 3 gekoppelt ist. Der Schalter 7 wird vom Empfänger und Regler 2 angesteuert und schaltet den Frequenzsynthesizer 6 für das Aussenden des Abfragesignals über den Verstärker 8 auf den SendeSende/Empfangsumschalter 3, der vom Empfänger und Regler 2 auf Senden bzw. Empfang umgeschaltet wird.

Wie bereits ausgeführt, klingen im Fall von Resonatoren die Antwortsignale gemäß einer Zeitfunktion ab, die durch das Energieausschwingen in den Resonatoren gegeben ist. Um dieses Ausschwingen in Signale gleicher Frequenz und konstanter Amplitude der Einhüllenden, welche auch nach dem Abklingen der Sensorantwort zur Verfügung steht, umzuwandeln, enthält der Empfänger eine vom Antwortsignal getastete Phasenregelschleife und einen eine Abtast- und Halteschaltung in der Phasenregelschleife ansteuernden, vom Antwortsignal angesteuerten Schwellwertdetektor.

Eine erste Ausführungsform eines Empfängers ist in Figur 2 dargestellt. Eine Phasenregelschleife enthält einen Phasendetektor 11, eine Abtast- und Halteschaltung 12, ein Schleifenfilter 13 sowie einen spannungsgesteuerten Oszillator 14, der auf den Phasendetektor 11 rückgekoppelt ist. Der Phasendetektor 11 kann ein Ringmischer sein, dessen Phasendetektorkonstante durch das Produkt der Amplituden des Eingangssignals und des Signals des spannungsgesteuerten Oszillators 14 festgelegt ist. Damit ist ein Eingriff in die Eigenschaften des Empfängers möglich. Durch Konstanthalten des Produktes der beiden Amplituden kann das exponentielle Abklingen des Eingangssignals ausgeregelt werden.

Ein Eingangssignal vom Sende/Empfangsumschalter 3 nach Figur 1 wird in einen Mischer 10 eingegeben, in dem es mit einem Signal von einem Frequenzsynthesizer 17 zu einem Signal geeigneter Frequenz für die Phasenregelschleife 11 bis 14 gemischt wird. Ein Ausgangssignal des Mischers 10 mit ausreichendem Rauschabstand wird durch einen Schwellwertdetektor 15 ermittelt, welcher die Abtast- und Halteschaltung 12 in der Phasenregelschleife 11 bis 14 ansteuert. Ist ein Mischerausgangssignal mit ausreichendem Rauschabstand vorhanden, so wird die Phasenregelschleife geschlossen und der spannungsgesteuerte Oszillator 14 innerhalb weniger Perioden mit dem Eingangssignal synchronisiert.

Das dynamische Verhalten sowie zulässige Frequenzabweichungen werden gemäß einem weiteren Merkmal der Erfindung durch das Schleifenfilter 13 bestimmt.

Fällt das Eingangssignal unter den Schwellwertsignalpegel des Schwellwertdetektors 15 oder verschwindet es, so wird die Phasenregelschleife 11 bis 14 über die Abtast- und Halteschaltung 12 geöffnet, so daß der spannungsgesteuerte Oszillator 14 als Funktion der von der Abtast- und Halteschaltung 12 gelieferten Steuerspannung frei schwingt.

Bei zyklischer Abfrage wird das Ausgangssignal des spannungsgesteuerten Oszillators 14 periodisch auf die Frequenz und die Phase des Resonatorantwortsignals mit gleich bleibender Amplitude nachgeregelt.

Die Frequenz des Ausgangssignals des spannungsgesteuerten Oszillators 14 kann durch Auszählen über lange Perioden mittels eines Zählers 16 sehr genau bestimmt werden.

In Weiterbildung der Erfindung ist eine Rechnersteuerung mittels eines Rechners 18 vorgesehen, der vom Zähler 16 die Frequenzinformation erhält und sowohl den Frequenzsynthesizer 17 als auch den das Abfragesignal als auch den Sender 1 nach Figur 1 steuert. Es handelt sich dabei um eine adaptive Nachregelung des Abfragesignals sowie der Frequenz des Synthesizers 17 sowie ggf. die Dauer und die Amplitude des Abfragesignals und damit, dessen Energie und Bandbreite. Dabei kann in einem ersten Abfragezyklus mit kurzen Abfrageimpulsen ein breiter Frequenzbereich durchsucht werden. Nach Messen eines Resonatorantwortsignals wird der Resonator mit breiteren schmalbandigeren Abfragesignalen mit möglichst großer Pumpenergie beaufschlagt, so daß er sehr genau in seiner Ausschwingfrequenz bestimmbar ist. Für gleichbleibende Abfrageenergie kann mit Reduzierung der Signalbandbreite die ausgestrahlte Sendeleistung verringert werden.

Eine weitere durch die Rechnersteuerung ermöglichte Ausgestaltung ist eine schmalbandige Resonatorabfrage bei einer Frequenzdrifft durch Meßwertänderung mit geringer Beeinflussung durch andere Resonatoren.

um einem eingeschränkten Dynamikbereich der Phasenregelschleife 11 bis 14 Rechnung zu tragen, kann gemäß einem weiteren Merkmal der Erfindung als Phasendetektor 11 ein Ringmischer vorgesehen sein, durch den die Phasendetektorkonstante durch das Produkt der Amplituden von Eingangssignal und lokalen Oszillator beeinflußbar ist und eine Steuerung durch die Amplitude des Oszillators 14 erfolgen kann.

Bei einer weiteren Ausführungsform eines Empfängers eines erfindungsgemäßen Identifizierungs- und/oder Sensorsystems gemäß Figur 3, in der gleiche Elemente wie in Figur 2 mit gleichen Bezugszeichen versehen sind, ist dem Phasendetektor 11 zur Konstanthaltung der Amplitude bei minimaler Verzerrung der Signalphase ein Verstärker 19 vorgeschaltet. Dieser Verstärker 19 kann als Begrenzerverstärker oder logarithmischer Verstärker ausgebildet sein. Aufgrund dieses Verstärkers 19 hat die Signalamplitude am Eingang der Phasenregelschleife 11 bis 14 im gesamten Dynamikbereich von typischerweise 50 bis 100 dB näherungsweise konstante Amplitude, wodurch eine Beeinflussung der Phasenregelschleife ausgeschlossen wird. Die Wirkungsweise der Ausführungsform nach Figur 3 entspricht im übrigen der Wirkungsweise der Ausführungsform nach Figur 2 und braucht daher hier nicht noch einmal näher erläutert zu werden.

Eine weitere Ausgestaltung eines Empfängers eines erfindungsgemäßen Identifizierungs- und/oder Sensorsystems ist in Figur 4 dargestellt, in der gleiche Elemente wie in den Figuren 2 und 3 mit gleichen Bezugszeichen versehen sind. Bei dieser Ausführungsform ist ein vom Mischerausgangssignal angesteuerter Schwellwertdetektor 20 als adaptiver Detektor ausgebildet, der zwei Schwellwertsignale mit unterschiedliche hohem Pegel liefert, die in Figur 4 mit "tiefer Pegel" und "hoher Pegel" bezeichnet sind. Weiterhin ist dabei ein vom Schwellwertdetektor 20 angesteuerter Umschalter 21 vorgesehen, der einmal über die Abtast- und Halteschaltung 12 und einmal direkt an den Phasendetektor 11 angekoppelt ist. Dabei liegen am Eingang des Schleifenfilters 13 und damit auch am Eingang des spannungsgesteuerten Oszillators 14 nur eingeschwungene Signale. Ist am Ausgang des Mischers 10 und damit am Eingang des Schwellwertdetektors 20 ein Signal mit ausreichend hohem Pegel vorhanden, so liefert der Schwellwertdetektor 20 das Ausgangssignal für hohen Eingangssignalpegel, wodurch die Abtast- und Halteschaltung 12 auf Abtastbetrieb geschaltet wird und der Umschalter 21 direkt auf den Ausgang des Phasendetektors 11 geschaltet ist. Damit ist die Phasenregelschleife eingerastet. Nimmt der Signalpegel am Ausgang des Mischers und damit am Eingang des Schwellwertdetektors 20 ab, so liefert dieser das Ausgangssignal für niedrigen Eingangssignalpegel, wodurch die Abtast- und Halteschaltung auf Haltebetrieb geschaltet und der Umschalter 21 das Haltesignal von der Abtast- und Halteschaltung 12 auf das Schleifenfilter 13 koppelt.

Eine weitere Ausführungsform eines Empfängers für ein erfindungsgemäßes Identifizierungs- und/oder Sensorsystem ist in Figur 5 dargestellt, in der gleiche Elemente wie in den Figuren 2 bis 4 mit gleichen Bezugszeichen versehen sind. Bei dieser Ausführungsform sind zwei Phasenregelschleifen 11, 12, 13, 14 bzw. 31, 32, 33, 34 vorgesehen. Die Ausgänge der beiden Phasenregelschleifen 11 bis 14 bzw. 31 bis 34 sind auf einen Umschalter 35 gekoppelt. Ein an den Ausgang des Mischers 10 angekoppelter Schwellwertdetektor 20 liefert ebenfalls wie der Schwellwertdetektor 20 nach Figur 4 zwei Schwellwertsignale für unterschiedlich hohe Pegel des Eingangssignals der Ausgang dieses Schwellwertdetektors 20 ist auf eine Abtaststeuerung 36 gekoppelt, welche als Funktion der Schwellwertsignale vom Schwellwertdetektor 20 ein Tastsignal 1 für die Phasenregelschleife 11 bis 14 sowie ein Tastsignal 2 für die Phasenregelschleife 31 bis 34 liefert. Weiterhin liefert diese Abtaststeuerung ein PLL-Steuersignal für den Umschalter 35, wodurch entweder die Phasenregelschleife 11 bis 14 oder die Phasenregelschleife 31 bis 35 auf den Zähler 16 gekoppelt wird.

Ist am Ausgang des Mischers 10 ein Signal mit ausreichend hohem Pegel vorhanden, so wird die Phasenregelschleife 11 bis 14 auf dieses Signal synchronisiert. Schaltet diese Phasenregelschleife 11 bis 14 auf Haltebetrieb um, so wird die Phasenregelschleife 31 bis 35 auf die Frequenz und Phase des stabil schwingenden spannungsgesteuerten Oszillators 14 der Phasenregelschleife 11 bis 14 synchronisiert. Der Zähler 16 erhält an seinem Eingang alternierend ein Signal der jeweils frequenzstabil im Haltebetrieb arbeitenden Phasenregelschleife.

Eine weitere Ausführungsform eines Empfängers eines erfindungsgemäßen Identifizierungs- und/oder Sensorsystems nach Figur 6, in der gleiche Elemente wie in Figur 2 mit gleichen Bezugszeichen versehen sind, stellt eine Alternative zum Frequenzmessen des spannungsgesteuerten Oszillators 14 dar. Dieser Empfänger arbeitet ebenso wie der Empfänger nach Figur 3 mit der Synchronisation des spannungsgesteuerten Oszillators 14 auf das Antwortsignal von Resonatoren in der Identifizierungs- und/oder Sensoranordnung 5 nach Figur 1. In diesem Empfänger ist ein an den Ausgang des Schleifenfilters 13 angekoppelter Analog-Digital-Umsetzer (ADC) 40 angekoppelt, welcher die Steuerspannung für den spannungsgesteuerten Oszillator 14 in einen digitalen Wert umsetzt. Die Messung erfolgt im eingerasteten Zustand der Phasenregelschleife 11 bis 14, so daß die Langzeitstabilität des Oszillators lediglich den Einschwingvorgang bei der Nachsynchronisation nicht jedoch die Meßgenauigkeit beeinflußt. Diese wird ausschließlich durch die Präzision des Analog-Digital-Umsetzers 40 und das Phasenrauschen des spannungsgesteuerten Oszillators 14 bestimmt. Gemäß einem besonderen Merkmal der Erfindung ist daher als spannungsgesteuerter Oszillator 14 ein Oszillator mit geringem Phasenrauschen vorgesehen.

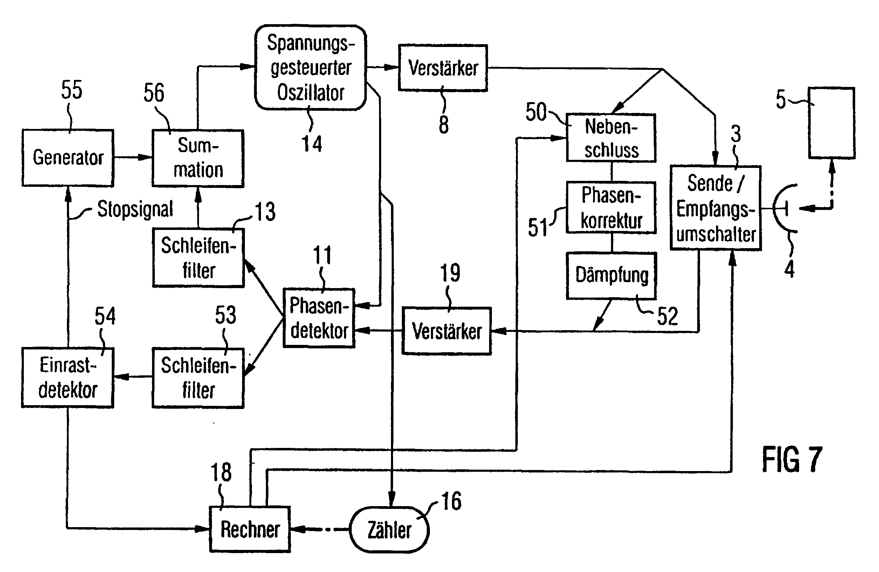

Figur 7 zeigt eine Ausführungsform eines erfindungsgemäßen Identifizierungs- und/oder Sensorsystem, bei dem Sender und Empfänger keine gesonderten Komponenten sind. Der spannungsgesteuerte Oszillator 14 ist dabei über den Verstärker 8 auf den vom Rechner 18 gesteuerten Sende/Empfangsumschalter 3 sowie einen diesem parallel liegenden vom Rechner 18 gesteuerten Nebenschlußzweig 50, 51, 52 gekoppelt, der einen Nebenschlußschalter 50, eine diesem nachgeschaltete Phasenkorrekturschaltung 51 sowie eine dieser nachgeschaltete Dämpfungsschaltung 52 enthält. Die beiden Zweige sind über den Verstärker 19 an den Phasendetektor 11 angekoppelt, der seinerseits auf das Schleifenfilter 13 gekoppelt ist. Weiterhin ist der Phasendetektor 11 auf ein weiteres Schleifenfilter 53 gekoppelt, das über einen Einrastdetektor 54, einen Generator 55 und eine Summationsschaltung 56 auf den spannungsgesteuerten Oszillator 14 gekoppelt ist, wobei die Summationsstufe 56 weiterhin an das Schleifenfilter 13 angekoppelt ist. Im eingeschwungenen, d. h. im eingerasteten Zustand werden der Sende/Empfangsumschalter 3 sowie der Nebenschlußschalter 50 alternierend geschaltet. Über den SendeSende/Empfangsumschalter 3 und die Antenne 4 wird das Abfragesignal für die Resonator-Identifizierungs- und/oder Sensoranordnung 5 erzeugt. Nach Umschaltung der parallel liegenden Zweige wird das Antwortsignal von der Anordnung 5 über den auf Empfang geschalteten SendeSende/Empfangsumschalter 3 empfangen. Es wird dabei von einer so kurzen Abfrageperiode ausgegangen, daß während des Empfangs immer ein von der Anordnung 5 rückgestrahltes Signal am SendeSende/Empfangsumschalter 3 eintrifft. Unter dieser Voraussetzung kann im kontinuierlich eingerasteten Zustand der Phasenregelschleife nachsynchronisiert werden, wenn auch in den Sendeintervallen ein Signal entsprechender Frequenz zur Verfügung steht. Im eingerasteten Zustand ist die Schwingfrequenz des spannungsgesteuerten Oszillators 14 gleich der Resonatoreigenfrequenz, so daß das Sendesignal für stationäre Vorgänge als Referenzsignal verwendbar ist. Dieses Signal wird über den Nebenschlußschalter 50, die Phasenkorrekturschaltung 51 und die Dämpfungsschaltung 52 in die Phasenregelschleife eingekoppelt. Die Phasenkorrekturschaltung 51 bewirkt dabei eine frequenzabhängige Phasenverzögerung in der Rückkopplung des abfragenden Sendesignals und verhindert daher ein Wegdriften des spannungsgesteuerten Oszillators 14 im Sendebetrieb.

Anstelle des dargestellten Nebenschlußzweiges 50, 51, 52 kann gemäß einem weiteren Merkmal auch eine getastete Phasenregelschleife verwendet werden, wie sie bei den Ausführungsformen nach den Figuren 2 bis 6 vorhanden ist.

Im nicht eingerasteten Zustand ist beim Suchen von Antwortsignalen in den Sendepausen kein Referenzsignal vorhanden, so daß abhängig von den Systemparametern möglicherweise kein Einrasten der Phasenregelschleife erfolgt. Dieses Problem wird durch eine Kombination aus einer Schaltung zur Erkennung des eingerasteten Zustandes aus dem Ausgangssignal des Phasendetektors 11 sowie eine Schaltung zur Änderung der Anfangsfrequenz des spannungsgesteuerten Oszillators 14 gelöst. Der eingerastete Zustand wird dabei durch den über das Schleifenfilter 53 angesteuerten Einrastdetektor 54 detektiert. Der Ausgangswert der Ausgangsfrequenz des spannungsgesteuerten Oszillators 14 wird dabei über den Generator 55 und die Summationsschaltung 56 schrittweise erhöht, bis der Einrastdetektor 54 den eingerasteten Zustand der Phasenregelschleife und somit das Auffinden der Resonatoren enthaltenden Anordnung 5 signalisiert.

Gemäß einer weiteren Ausgestaltung der Erfindung kann die Phasenregelschleife bei den oben beschriebenen Ausführungsformen als (nicht eigens dargestellte) digitale Phasenregelschleife ausgebildet werden. Als Oszillator wird dabei kein spannungsgesteuerter sondern ein numerisch gesteuerter Oszillator verwendet. Der Phasendetektor, das Schleifenfilter sowie alle Steuerfunktionen sind in den Steuerrechner 18 integriert.

## Patentansprüche

1. Identifizierungs- und/oder Sensorsystem mit einem Sender (1), der über Funk Abfragesignale zu einer Identifizierungsund/oder Sensoranordnung (5) aussendet, mit einem Empfänger (2), der von der Identifizierungs- und/oder Sensoranordnung (5) rückgesendete Antwortsignale auswertet und mit in der Identifizierungs- und/oder Sensoranordnung (5) vorgesehenen Resonatoren zur Festlegung mindestens eines abzufragenden Parameters,
**dadurch gekennzeichnet,**
**daß** der Empfänger (2) eine vom Antwortsignal angesteuerte getastete Phasenregelschleife (11 bis 14) und einen eine Abtast- und Halteschaltung (12) in der Phasenregelschleife (11 bis 14) ansteuernden Schwellwertdetektor (15) enthält.

2. Identifizierungs- und/oder Sensorsystem nach Anspruch 1,
**dadurch gekennzeichnet,**
**daß** die Abtast- und Halteschaltung (12) durch ein vom Pegel des Eingangssignals abhängiges Ausgangssignal des Schwellwertdetektors (15) angesteuert ist.

3. Identifizierungs- und/oder Sensorsystem nach Anspruch und/oder 2,
**dadurch gekennzeichnet,**
**daß** an den Ausgang der Phasenregelschleife (11 bis 14) ein Zähler (16) angekoppelt ist.

4. Identifizierungs- und/oder Sensorsystem nach einem der Ansprüche 1 bis 3,
**dadurch gekennzeichnet,**
**daß** der Phasenregelschleife (11 bis 14) ein Mischer (10) vorgeschaltet ist.

5. Identifizierungs- und/oder Sensorsystem nach Anspruch 4,
**dadurch gekennzeichnet,**
**daß** dem Mischer (10) das mit dem Abfragesignal zu mischende Signal über einen von einem Rechner (18) gesteuerten Synthesizer (17) zugeführt wird.

6. Identifizierungs- und/oder Sensorsystem nach einem der Ansprüche 1 bis 5,
**gekennzeichnet durch**
eine Steuerung **durch** den Rechner (18) als Funktion einer vom Zähler (16) gelieferten Frequenzinformation.

7. Identifizierungs- und/oder Sensorsystem nach einem der Ansprüche 1 bis 6,
**gekennzeichnet durch**
eine Einstellung der Frequenz des Abfragesignals im Sender (2) **durch** den Rechner (18).

8. Identifizierungs- und/oder Sensorsystem nach einem der Ansprüche 1 bis 7,
**dadurch gekennzeichnet,**
**daß** als Phasendetektor (11) in der Phasenregelschleife (11 bis 14) ein Ringmischer vorgesehen ist, dessen Phasendetektorkonstante durch das Produkt der Amplituden von Eingangssignal und eines Signals des spannungsgesteuerten Oszillators (14) der Phasenregelschleife (11 bis 14) festgelegt ist.

9. Identifizierungs- und/oder Sensorsystem nach einem der Ansprüche 1 bis 8,
**dadurch gekennzeichnet,**
**daß** der Phasenregelschleife (11 bis 14) eine Stufe (19) zur Konstanthaltung der Amplitude des Phasenregelschleifen-Eingangssignals vorgeschaltet ist.

10. Identifizierungs- und/oder Sensorsystem nach Anspruch 9,
**dadurch gekennzeichnet,**
**daß** die Stufe (19) zur Konstanthaltung der Amplitude ein Begrenzerverstärker ist.

11. Identifizierungs- und/oder Sensorsystem nach Anspruch 9,
**dadurch gekennzeichnet,**
**daß** die Stufe (19) zur Konstanthaltung der Amplitude ein logarithmischer Verstärker ist.

12. Identifizierungs- und/oder Sensorsystem nach einem der Ansprüche 1 bis 11,
**dadurch gekennzeichnet,**
**daß** der Schwellwertdetektor (20) als asynchroner Detektor ausgebildet ist, der zwei Schwellwertsignale für unterschiedlich hohe Eingangssignalpegel liefert, daß in Phasenregelschleife (11 bis 14) hinter der Abtast- und Halteschaltung (12) ein Umschalter (21) vorgesehen ist, daß der Ausgang des Schleifenfilters (13) der Phasenregelschleife (11 bis 14) sowohl über die Abtast- und Halteschaltung (12) als auch direkt über den Umschalter (21) an den spannungsgesteuerten Oszillator (14) angekoppelt ist und daß ein einen hohen Eingangssignalpegel repräsentierendes Ausgangssignal des Schwellwertdetektors (20) die Abtast- und Halteschaltung (12) und ein einen niedrigen Eingangssignalpegel repräsentierendes Ausgangssignal des Schwellwertdetektors (20) das Schleifenfilter (13) direkt über den Umschalter (21) oder über die Abtast- und Halteschaltung (12) an den Ausgang des Phasendetektors (11) koppelt.

13. Identifizierungs- und/oder Sensorsystem nach einem der Ansprüche 1 bis 12,
**gekennzeichnet durch**
zwei Phasenregelschleifen (11 bis 14; 31 bis 34), deren Ausgänge an einem Umschalter (35) gekoppelt sind, einen mehrstufigen und eine dem Schwellwertdetektor (20) nachgeschaltete Abtaststeuerschaltung (36), welche in Abhängigkeit von den Schwellwertsignalen vom Schwellwertdetektor (20) zwei Abtaststeuersignale zur Ansteuerung der Abtast- und Halteschaltungen (12; 32) der Phasenregelschleifen (11 bis 14; 31 bis 34) und ein den Umschalter (35) ansteuerndes Phasenregelschleifen-Ausgangssignal liefert.

14. Identifizierungs- und/oder Sensorsystem nach einem der Ansprüche 1 bis 13,
**gekennzeichnet durch**
einen Analog-Digital-Umsetzer (40), der die Steuerspannung des spannungsgesteuerten Oszillators (14) der Phasenregelschleife (11 bis 14) als Funktion des Ausgangssignals des die Abtast- und Halteschaltung (12) der Phasenregelschleife (11 bis 14) ansteuernden Schwellwertdetektors (15) in ein Digitalsignal umsetzt.

15. Identifizierungs- und/oder Sensorsystem nach Anspruch 14,
**dadurch gekennzeichnet,**
**daß** der spannungsgesteuerte Oszillator (14) als Oszillator mit kleinem Phasenrauschen ausgebildet ist.

16. Identifizierungs- und/oder Sensorsystem nach einem der Ansprüche 1 bis 15,
**gekennzeichnet durch**
einen einzigen in der Phasenregelschleife (11, 13, 14) liegenden sowohl dem Sender als auch dem Empfänger angehörenden spannungsgesteuerten Oszillator (14), dessen Ausgang über den vom Rechner (14) gesteuerten Sende/Empfangsschalter (3) und
einen diesem parallel liegenden **durch** den Rechner (18) gesteuerten Nebenschlußzweig (50, 51, 52) auf den Phasendetektor (11) gekoppelt ist.

17. Identifizierungs- und/oder Sensorsystem nach Anspruch 16,
**dadurch gekennzeichnet,**
**daß** der Nebenschlußschalterzweig (50, 51, 52) einen Nebenschlußschalter (50), eine an diesen angekoppelten Phasenkorrekturschaltung (51) und eine an diese angekoppelte Dämpfungsschaltung (52) enthält.

18. Identifizierungs- und/oder Sensorsystem nach Anspruch 16 und 17,
**dadurch gekennzeichnet,**
**daß** der spannungsgesteuerte Oszillator (14) über einen Verstärker (8) an den Sende/Empfangsumschalter (3) und den Nebenschlußzweig (50, 51, 22) angekoppelt ist.

19. Identifizierungs- und/oder Sensorsystem nach Anspruch 16 und 17,
**dadurch gekennzeichnet,**
**daß** der Nebenschlußschalterzweig durch eine weitere Phasenregelschleife gebildet ist.

20. Identifizierungs- und/oder Sensorsystem nach einem der Ansprüche 16 bis 19,
**gekennzeichnet durch**
eine vom Phasendetektor (11) in der Phasenregelschleife (11, 13, 14) angesteuerte Schaltung (54) zur Detektierung des eingerasteten Zustandes der Phasenregelschleife (11, 13, 14) und einen von der Detektorschaltung (54) angesteuerten Signalgenerator (55) zur Änderung der Frequenz des spannungsgesteuerten Oszillators (14), der bei Detektierung des eingerasteten Zustandes der Phasenregelschleife (11, 13, 14) **durch** die Detektorschaltung (54) abgeschaltet wird.

21. Identifizierungs- und/oder Sensorsystem nach einem der Ansprüche 16 bis 20,
**dadurch gekennzeichnet,**
**daß** der Detektorschaltung (54) ein Schleifenfilter (53) vorgeschaltet ist.

22. Identifizierungs- und/oder Sensorsystem nach einem der Ansprüche 1 bis 21,
**dadurch gekennzeichnet,**
**daß** die Phasenregelschleife als digitale Regelschleife ausgebildet ist.

23. Identifizierungs- und/oder Sensorsystem nach Anspruch 22,
**dadurch gekennzeichnet,**
**daß** der Oszillator der Phasenregelschleife als numerisch gesteuerter Oszillator ausgebildet ist und daß die weiteren Komponenten der Phasenregelschleife sowie die Steuerfunktionen in einen Steuerrechner integriert sind.

## Claims

1. Identification and/or sensor system having a transmitter (1) which transmits polling signals to an identification and/or sensor arrangement (5) by radio, having a receiver (2) which evaluates response signals returned by the identification and/or sensor arrangement (5), and having resonators provided in the identification and/or sensor arrangement (5) for the purpose of stipulating at least one parameter which is to be requested,
**characterized**
**in that** the receiver (2) contains a sampled phase locked loop (11 to 14) actuated by the response signal and a threshold-value detector (15) actuating a sample and hold circuit (12) in the phase locked loop (11 to 14).

2. Identification and/or sensor system according to Claim 1,
**characterized**
**in that** the sample and hold circuit (12) is actuated by an output signal from the threshold-value detector (15) which is dependent on the level of the input signal.

3. Identification and/or sensor system according to Claim [lacuna] and/or 2,
**characterized**
**in that** a counter (16) is coupled to the output of the phase locked loop (11 to 14).

4. Identification and/or sensor system according to one of Claims 1 to 3,
**characterized**
**in that** the phase locked loop (11 to 14) has a mixer (10) connected upstream of it.

5. Identification and/or sensor system according to Claim 4,
**characterized**
**in that** the mixer (10) is supplied with the signal to be mixed with the polling signal via a synthesizer (17) controlled by a computer (18).

6. Identification and/or sensor system according to one of Claims 1 to 5,
**characterized by**
control by the computer (18) as a function of frequency information delivered by the counter (16).

7. Identification and/or sensor system according to one of Claims 1 to 6,
**characterized by**
setting of the polling signal's frequency in the transmitter (2) by the computer (18).

8. Identification and/or sensor system according to one of Claims 1 to 7,
**characterized**
**in that** the phase detector (11) provided in the phase locked loop (11 to 14) is a ring mixer whose phase detector constant is stipulated by the product of the amplitudes of input signal and of a signal from the voltage-controlled oscillator (14) in the phase locked loop (11 to 14).

9. Identification and/or sensor system according to one of Claims 1 to 8,
**characterized**
**in that** the phase locked loop (11 to 14) is preceded by a stage (19) for keeping the amplitude of the phase locked loop input signal constant.

10. Identification and/or sensor system according to Claim 9,
**characterized**
**in that** the stage (19) for keeping the amplitude constant is a limiter amplifier.

11. Identification and/or sensor system according to Claim 9,
**characterized**
**in that** the stage (19) for keeping the amplitude constant is a logarithmic amplifier.

12. Identification and/or sensor system according to one of Claims 1 to 11,
**characterized**
**in that** the threshold-value detector (20) is in the form of an asynchronous detector which delivers two threshold-value signals for different levels of input signal, in that a changeover switch (21) is provided downstream of the sample and hold circuit (12) in the phase locked loop (11 to 14), in that the output of the loop filter (13) in the phase locked loop (11 to 14) is coupled to the voltage-controlled oscillator (14) both via the sample and hold circuit (12) and directly via the changeover switch (21), and in that an output signal from the threshold-value detector (20) which represents a high input signal level couples the sample and hold circuit (12), and an output signal from the threshold-value detector (20) which represents a low input signal level couples the loop filter (13), to the output of the phase detector (11) directly via the changeover switch (21) or via the sample and hold circuit (12).

13. Identification and/or sensor system according to one of Claims 1 to 12,
**characterized by**
two phase locked loops (11 to 14; 31 to 34) whose outputs are coupled to a changeover switch (35), a multistage [lacuna] and a sampling control circuit (36) which is connected downstream of the threshold-value detector (20) and, on the basis of the threshold-value signals from the threshold-value detector (20), delivers two sampling control signals for actuating the sample and hold circuits (12; 32) in the phase locked loops (11 to 14; 31 to 34) and a phase locked loop output signal which actuates the changeover switch (35).

14. Identification and/or sensor system according to one of Claims 1 to 13,
**characterized by**
an analog/digital converter (40) which converts the control voltage for the voltage-controlled oscillator (14) in the phase locked loop (11 to 14) into a digital signal as a function of the output signal from the threshold-value detector (15) which actuates the sample and hold circuit (12) in the phase locked loop (11 to 14).

15. Identification and/or sensor system according to Claim 14,
**characterized**
**in that** the voltage-controlled oscillator (14) is in the form of an oscillator having low phase noise.

16. Identification and/or sensor system according to one of Claims 1 to 15,
**characterized by**
a single voltage-controlled oscillator (14) which is contained in the phase locked loop (11, 13, 14), is affiliated both to the transmitter and to the receiver and whose output is coupled to the phase detector (11) via the transmission/reception switch (3), controlled by the computer (14) [sic], and a shunt path (50, 51, 52) which is in parallel with said transmission/reception switch and is controlled by the computer (18).

17. Identification and/or sensor system according to Claim 16,
**characterized**
**in that** the shunt switch path (50, 51, 52) contains a shunt switch (50), a phase correction circuit (51) coupled to said shunt switch and a damping circuit (52) coupled to said phase correction circuit.

18. Identification and/or sensor system according to Claims 16 and 17,
**characterized**
**in that** the voltage-controlled oscillator (14) is coupled to the transmission/reception changeover switch (3) and to the shunt path (50, 51, 22) via an amplifier (8).

19. Identification and/or sensor system according to Claims 16 and 17,
**characterized**
**in that** the shunt switch path is formed by a further phase locked loop.

20. Identification and/or sensor system according to one of Claims 16 to 19,
**characterized by**
a circuit (54) which is actuated by the phase detector (11) in the phase locked loop (11, 13, 14) for the purpose of detecting the locked state of the phase locked loop (11, 13, 14), and a signal generator (55) which is actuated by the detector circuit (54) for the purpose of changing the frequency of the voltage-controlled oscillator (14), which is disconnected when the detector circuit (54) detects the locked state of the phase locked loop (11, 13, 14).

21. Identification and/or sensor system according to one of Claims 16 to 20,
**characterized**
**in that** the detector circuit (54) has a loop filter (53) connected upstream of it.

22. Identification and/or sensor system according to one of Claims 1 to 21,
**characterized**
**in that** the phase locked loop is in the form of a digital control loop.

23. Identification and/or sensor system according to Claim 22,
**characterized**
**in that** the oscillator in the phase locked loop is in the form of a numerically controlled oscillator, and in that the other components of the phase locked loop and the control functions are integrated in a control computer.

## Revendications

1. Système d'identification et/ou de détection, comprenant un émetteur (1) qui émet par radio des signaux d'interrogation allant à un dispositif (5) d'identification et/ou de détection, un récepteur (2) qui exploite les signaux de réponse réémis par le dispositif (5) d'identification et/ou de détection et des résonateurs qui sont prévus dans le dispositif (5) d'identification et/ou de détection et qui sont destinés à la fixation d'au moins un paramètre d'interrogation,
**caractérisé,**
**en ce que** le récepteur comporte une boucle (11 à 14) à verrouillage de phase à impulsion commandée par le signal de réponse et un détecteur (15) de valeur de seuil commandant un circuit (12) d'analyse et de maintien de la boucle (11 à 14) à verrouillage de phase.

2. Système d'identification et/ou de détection suivant la revendication 1, **caractérisé en ce que** le circuit (12) d'analyse et de maintien est commandé par un signal de sortie du détecteur (15) à valeur de seuil, qui dépend du niveau de signal d'entrée.

3. Système d'identification et/ou de détection suivant la revendication 1 ou 2, **caractérisé en ce qu'**un compteur (16) est couplé à la sortie de la boucle (11 à 14) à verrouillage de phase.

4. Système d'identification et/ou de détection suivant l'une des revendications 1 à 3, **caractérisé en ce qu'**un mélangeur (12) est monté en amont de la boucle (11 à 14) à verrouillage de phase.

5. Système d'identification et/ou de détection suivant la revendication 4, **caractérisé en ce que** le signal à mélanger au signal d'interrogation est envoyé au mélangeur (10) par un synthétiseur (17) commandé par un ordinateur (18).

6. Système d'identification et/ou de détection suivant l'une des revendications 1 à 5, **caractérisé par** une commande par l'ordinateur (18) en fonction d'une information de fréquence fournie par le compteur (16).

7. Système d'identification et/ou de détection suivant l'une des revendications 1 à 6, **caractérisé par** un réglage de la fréquence du signal d'interrogation dans l'émetteur (2) par l'ordinateur (18).

8. Système d'identification et/ou de détection suivant l'une des revendications 1 à 7, **caractérisé en ce qu'**il est prévu comme détecteur (11) de phase dans la boucle (11 à 14) à verrouillage de phase un mélangeur à anneau, dont la constante de détecteur de phase est fixée par le produit de l'amplitude du signal d'entrée et d'un signal de l'oscillateur (14) commandé en tension de la boucle (11 à 14) à verrouillage de phase.

9. Système d'identification et/ou de détection suivant l'une des revendications 1 à 8, **caractérisé en ce qu'**il est monté en amont de la boucle (11 à 14) à verrouillage de phase un étage (19) destiné à maintenir constante l'amplitude du signal d'entrée dans la boucle à verrouillage de phase.

10. Système d'identification et/ou de détection suivant la revendication 9, **caractérisé en ce que** l'étage de maintien de l'amplitude à une valeur constante est un amplificateur à limiteur.

11. Système d'identification et/ou de détection suivant la revendication 9, **caractérisé en ce que** l'étage (19) de maintien de l'amplitude à une valeur constante est un amplificateur localisé.

12. Système d'identification et/ou de détection suivant l'une des revendications 1 à 11, **caractérisé en ce que** le détecteur (20) à valeur de seuil est constitué en détecteur asynchrone qui fournit deux signaux de valeur de seuil pour un niveau de signal d'entrée de hauteur différente, **en ce qu'**il est prévu dans la boucle (11 à 14) à verrouillage de phase un inverseur (21) derrière le circuit (12) d'analyse et de maintien **en ce que** la sortie du filtre (13) de la boucle (11 à 14) de verrouillage de phase est couplée à l'oscillateur (14) commandé en tension, tant par le circuit (12) d'analyse et de maintien que directement par l'inverseur (21) et **en ce qu'**un signal de sortie du détecteur (20) de valeur de seuil représentant un niveau haut du signal d'entrée est envoyé au circuit (12) d'analyse et de maintien et un signal de sortie du détecteur (20) de valeur de seuil représentant un niveau bas du signal d'entrée est envoyé au filtre (13) de la boucle directement par l'inverseur (21) ou par le circuit (12) d'analyse et de maintien à la sortie du détecteur (11) de phase.

13. Système d'identification et/ou de détection suivant l'une des revendications 1 à 12, **caractérisé par** deux boucles (11 à 14 ; 31 à 34) de verrouillage de phase dont les sorties sont couplées à un inverseur (35), un circuit (36) de commande d'analyse à plusieurs étages est en aval du détecteur (21) de valeur de seuil qui, en fonction des signaux de valeur de seuil du détecteur (20) de valeur de seuil, fournit deux signaux de commande d'analyse pour commander les circuits (12, 32) d'analyse et de maintien des boucles (11 à 14 ; 31 à 34) de verrouillage de phase et un signal de sortie de boucle de verrouillage de phase commandant l'inverseur (35).

14. Système d'identification et/ou de détection suivant l'une des revendications 1 à 13, **caractérisé par** un convertisseur (40) analogique numérique qui transforme la tension de commande de l'oscillateur (14) commandée en tension de la boucle (11 à 14) de verrouillage de phase en fonction du signal de sortie du détecteur (15) de valeur de seuil commandant le circuit (12) d'analyse et de maintien de la boucle (11 à 14) de verrouillage de phase en un signal numérique.

15. Système d'identification et/ou de détection suivant la revendication 14, **caractérisé en ce que** l'oscillateur (14) commandé en tension est constitué en oscillateur ayant un petit bruit de phase.

16. Système d'identification et/ou de détection suivant l'une quelconque des revendications 1 à 15, **caractérisé par** un oscillateur (14) commandé en tension se trouvant uniquement dans la boucle (11, 13, 14) à verrouillage de phase et appartenant tant à l'émetteur qu'au récepteur dont la sortie est couplée par le commutateur (3) d'émission/réception commandé par l'ordinateur (14) et par un branchement (50, 51, 52) de dérivation, en parallèle avec le commutateur T, et commandé par l'ordinateur (18), sur le détecteur (11) de phase.

17. Système d'identification et/ou de détection suivant la revendication 16, **caractérisé en ce que** le branchement (50, 51, 52) de commutateur en dérivation comporte un commutateur (50) de dérivation, un circuit (51) de correction de phase qui y est accouplé et un circuit (52) d'amortissement accouplé à ce dernier.

18. Système d'identification et/ou de détection suivant la revendication 16 ou 17, **caractérisé en ce que** l'oscillateur (14) commandé en tension est couplé par un amplificateur (8) au commutateur (3) d'émission/réception et au branchement (50, 51, 52) de dérivation.

19. Système d'identification et/ou de détection suivant la revendication 16 et 17, **caractérisé en ce que** le branchement de commutateur de dérivation est formé par une autre boucle à verrouillage de phase.

20. Système d'identification et/ou de détection suivant l'une des revendications 16 à 19, **caractérisé par** un circuit (54) qui est commandé par le détecteur (11) de phase de la boucle (11, 13, 14) à verrouillage de phase et qui est destiné à détecter l'état verrouillé de la boucle (11, 13, 14) à verrouillage de phase et par un générateur (55) de signaux destiné à modifier la fréquence de l'oscillateur (14) commandé en tension qui, lors de la détection de l'état verrouillé de la boucle (11, 13, 14) à verrouillage de phase, est déconnectée par le circuit (54) de détecteur.

21. Système d'identification et/ou de détection suivant l'une des revendications 16 à 20, **caractérisé en ce qu'**un filtre (53) de boucle est monté en amont du circuit (54) de détecteur.

22. Système d'identification et/ou de détection suivant l'une des revendications 1 à 21, **caractérisé en ce que** la boucle à verrouillage de phase est constituée sous la forme d'une boucle à verrouillage numérique.

23. Système d'identification et/ou de détection suivant la revendication 22, **caractérisé en ce que** l'oscillateur de la boucle à verrouillage de phase est constitué en oscillateur commandé numériquement et **en ce que** les autres composants de la boucle à verrouillage de phase ainsi que les fonctions de commande sont intégrés dans un ordinateur de commande.
